# EUROPEAN PATENT APPLICATION

(11) **EP 2 184 679 A1**
(43) Date of publication of application: **12.05.2010**
(21) Application number: 08167996.1
(22) Date of filing: 30.10.2008
(51) Int. Cl.: G06F 9/44, G06F 3/048

(54) **Method for operating an ending web-widget with data retrieved from a starting web-widget**

(71) Applicant: Alcatel Lucent, 75008 Paris (FR)
(72) Inventor: Dorbes, Guillaume, 91310 Montlhéry (FR); Bazin, Claire, 75014 Paris (FR)
(74) Representative: Lebkiri, Alexandre

(57) **Abstract**

The invention relates to a method for operating an ending widget (14) with data retrieved from a starting widget (12), both the starting widget (12) and the ending widget (14) being portable software programs installed and executed through a Markup Language Web based page in order to display, respectively, at least one visual object (26, 28, 30) and at least one visual area (32, 34, 36), **characterized in that** it comprises the following steps:
- The step for the starting widget (12) to detect a drag of the visual object (28) and to inform a distant server (38) from such detected drag,
- The step for the ending widget (14) to detect a drop in the visual area (34) and to inform the distant server (38) from such detected drop, and
The step for the distant server (38) to correlate the drag in the starting widget (12) with the drop in the ending widget (14) so as to trigger an action whereby data associated to the visual object (28) performs a function associated with the visual area (34).

## Description

The invention relates to a method for operating an ending widget with data retrieved from a starting widget.

The World Wide Web, thereafter referred to as the "Web", is a system of interlinked hypertext pages which can be accessed through the Internet. More precisely, a user can display on his/her computer Web pages which are stored in a distant server by downloading the code source of such Web pages via Internet.

Such Web pages may contain multimedia data - such as text, images and videos - and/or provide access to applications. Also, Web pages generally allow navigating between them using hyperlinks.

Specific technologies supporting the Web have been developed in order to increase interconnectivity and interactivity in the Web-delivered contents, such technologies being commonly named Web 2.0.

The Web 2.0 allows users not only to retrieve applications and/or information - as the in prior Web - but also to participate in their creation and/or development.

In this context of the Web 2.0, portable software programs called "widgets" have been developed to provide end users with applications that can be installed and executed within a Markup Language Web based page.

Practically, Web widgets are mainly DHTML, for Dynamic HyperText Markup Language, and scripting programs supported by Web browsers - or any related embedded plug-in - which can be downloaded from a Website and executed in a Web client e.g. a browser.

At this level, it might be remembered that a Web portal is a site that provides a point of access to the information stored in the Web. Web Portals present information from diverse sources in a unified way such as the Google™ web portal: www.google.com.fr/ig

Following this example, such Web 2.0 portal of Google™ enables end users to customize their environment by implementing, in a dedicated Web page, multiple independent widgets which can be retrieved from all around the Internet.

By nature, widgets are created by independent developers and, as a consequence, operations between widgets are difficult to foresee and to implement. This is specifically the case in a drag'n'drop operation whereby data is moved from one application to another with a visual control - generally a one-click mouse selection of a visual object thereafter drop into a visual area.

To allow drag'n'drop operations between two widgets, it is known to provide an integrated solution wherein widgets are commonly and specifically developed for a unique predetermined Web portal.

For instance, the Lazslo Company provides Webtop widgets which allow inter widgets operation through their Web portal: www.laszlosytems.com

Disappointingly, this method limits the diversity of both the Web portals and the widgets which are available to an end user since only the integrated Web portal and the integrated widgets allow interactions.

The present invention aims to solve the hereinabove indicated problem by providing a method which allows interactions, and more specifically drag'n'drop operations, between widgets independently of the Web portal considered for their access.

For that purpose, the invention relates to a method for operating an ending widget with data retrieved from a starting widget, both the starting widget and the ending widget being portable software programs installed and executed through a Markup Language Web based page in order to display, respectively, at least one visual object and at least one visual area, **characterized in that** it comprises the following steps:
- The step for the starting widget to detect a drag of the visual object and to inform a distant server from such detected drag,
- The step for the ending widget to detect a drop in the visual area and to inform the distant server from such detected drop, and
- The step for the distant server to correlate the drag in the starting widget with the drop in the ending widget so as to trigger an action whereby data associated to the dragged visual object performs a function associated with the dropping visual area.

A method according to the invention allows interactions, and more specifically drag'n'drop operations, between widgets independently of the Web portal considered for their access.

For that purpose, the invention requires a distant server to correlate a drag in the starting widget with a drop in the ending widget, avoiding thereby any specific requirement from the Web portal to operate such drag"n"drop operation.

In one embodiment, the starting widget detects the drag of the visual object when a tracking mechanism selects such visual object.

In one embodiment, the ending widget detects the drop in a visual area when a tracking mechanism enters such visual area.

In one embodiment, the tracking mechanism is a mouse, a keypad, a sensitive pad or a vocal guided mechanism.

In one embodiment, the starting widget and the ending widget comprise a function to detect, respectively, a drag of a visual object or a drop into a visual area and to inform the distant server of such detection.

In one embodiment, the server correlates the drag in the starting widget with the drop in the ending widget through an association of the detected drag with the detected drop.

In one embodiment, the association comprises the prior step of providing a status to each visual object of the starting widget indicating whether the visual object is currently dragged or not.

In one embodiment, the association comprises the prior step of providing a status to each visual area of the ending widget indicating whether a dropped is currently performed within or not.

The invention also relates to a server aimed to allow the operating of an ending widget with data retrieved from a starting widget, both the starting widget and the ending widget being portable software programs installed and executed through a Markup Language Web based page in order to display, respectively, at least one visual object and at least one visual area, **characterized in that** it comprises:
- means for receiving detections from both the starting widget and the ending widget indicating respectively a drag of the visual object and a drop in the visual area, and
- means for correlating such drag in the starting widget with such drop in the ending widget,

In order to trigger an action whereby data associated to the visual object performs a function associated with the visual area following a method according to any of the previous embodiments.

Finally, the invention also relates to a portable software program widget installed and executed through a Markup Language Web based page in order to display at least one visual object and/or at least one visual area, characterized in that it comprises:
- means to detect a drag of the visual object and to inform a distant server from such detected drag, or
- means to detect a drop in the visual area and to inform a distant server from such detected drop,

So that the distant server can correlate respectively the drag or the drop in such widget with, respectively, a later drop in a visual area or a previous drag of a visual object in another widget so as to trigger an action whereby data associated with the dragged visual object performs a function associated with the dropping visual area following a method according to any of the previous embodiments.

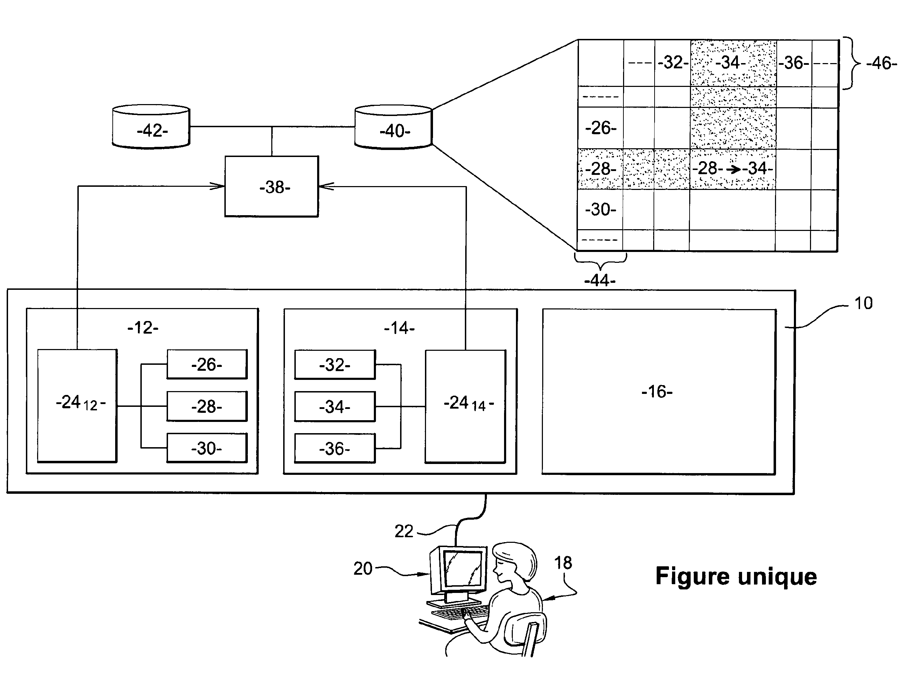

The foregoing aspects and many of the attendant advantages of this invention will become more readily appreciated as the same becomes better understood by reference to the following detailed description when taking in conjunction with the accompanying drawing which is a pictorial depiction of a preferred embodiment of the invention.

As represented on the drawing, widgets 12, 14 or 16 can be operated by a user 18 in the framework of his/her selected Web portal 10. Indeed, the invention implements inter-widgets functions without requiring specific conditions from the Web portal 10 as explained thereafter.

To reach the selected Web portal 10, the user 18 uses her/his computer 20 which presents a link 22 with the Internet wherein the Web portal service is delivered.

According to the invention, the user can access through the Web portal 10 to the starting widget 12 and the ending widget 14. More precisely, both the starting widget 12 and the ending widget 14 are executed through a Markup Language Web based page in order to display, respectively, at least one visual object and at least one visual area.

Also according to the invention, widgets 12 and 14 present drag'n'drop functions 24₁₂ or 24₁₄ which detect respectively a drag of the visual object 26, 28 or 30 and/or a drop of a visual object into a visual area 32, 34 or 36.

Moreover such functions 24₁₂ or 24₁₄ can communicate with a server 38 which mainly operates two functions:
- Firstly, server 38 registers the information provided by the widgets to determine the status - dragged or not dragged - of a visual object and the status - dropping or not dropping - of a visual area.
   For that purpose, a matrix 40 might be used considering a column 44 which identifies visual objects 26, 28, 30 and a line 46 which identifies visual areas 32, 34 and 36.
   Therewith the matrix 40 can establish a correspondence between a dragged visual object - a line - of a starting widget and an activated drop visual area - a column - of an ending widget.
- Secondly, server 38 maintains a user register 42 wherefrom user preferences relating to the drag'n'drop process can be stored, for instance relating to timeout policies, identification or authorization policies, portal constraints.

More generally, register 42 considers user's relevant events which must be implemented when operating the invention for a specific client, for instance relating to his/her available bandwidth or his/her specific confidential policy.

As a concrete application of the invention, it could be considered that :
- starting widget 12 relates to a contact register. In that case, visual objects 26, 28 and 30 might be pictures which are associated to different locations such as cities.
- ending widget 14 relates to weather forecasts. In that case, visual areas 32, 34 and 36 might be entries associated to a site which provides weather forecasts at 1, 3 or 5 days in advance.

When the user 18 desires to obtain a weather forecast at 3 days for a city associated to picture 28, user 18 can drag the picture 28 of starting widget 12 so as to drop it on the visual area 34 of ending widget 14.

In this case the function 24₁₂ of widget 12 detects the drag of the visual object 28 - a picture as such - with a tracking mechanism - typically with a mouse selection.

Thereafter the function 24₁₂ informs the server 38 of this drag which is registered on the line 28 of matrix 40.

When the tracking mechanism starts a drop into the visual area 34, the function 24₁₄ of widget 14 detects the drop into such visual area 34 - which is associated to a query for a weather forecast at 3 days.

Thereafter the function 24₁₄ informs the server 38 of this drop which is registered on the column 34 of the matrix 40.

This way, the server 38 can correlate the drag in the starting widget with the drop in the ending widget so as to trigger the action whereby data associated to the dragged visual object performs a function associated with the dropping visual area.

In this example, the data associated to the visual object 28 is an address whereas the function associated to the visual area is a weather forecast query at three days.

Thus, the weather forecast of the city which has been selected through the dragged image in starting widget 12 is required by the ending widget 14 function associated to the visual area wherein the drop takes place.

As previously indicated, the hereinabove described drag'n'drop between widgets can be supported through any Web portal which allow the drag'n'drop applications as such, for instance based on Javascript programs.

The start of the drag can be done using the combination of the Java-scripts events "OnMouseDown" and "OnMouseOUt" which applied to various visual objects.

In this case, the client then put a value on the server side in an Ongoing-Draggin variable.

In the same way, the drop detection can be based on a combination of JavaScript events "OnMouseOver" and "OnMouseUp" applied to focus areas of the displayed Web page.

While preferred embodiments of the invention have been disclosed in considerable detail, many variations and changes in the method described can be operated without departing from the spirit or scope of the invention.

For instance, it is clear that the invention encompasses embodiments wherein a widget implement drag'n'drop functions which detect both drag and drop operations.

Similarly, the invention encompasses embodiments wherein the widgets are displayed in similar or independent Webpages.

As another example, the invention encompasses embodiments wherein a plurality of visual objects are simultaneously dragged. In that case, the invention foresee means to allow an identification to each dragged visual object which allows to determine thereafter which visual object is dropped in a visual area.

Also, more than two widgets can be considered for an inter-widget operation while using the invention. For instance, one starting widget could be used to drop simultaneously into a plurality of ending widgets a dragged visual object through a method within the scope of the patent.

Finally, for the sake of clarity, it must be underlined that a Markup Language Web based page can be a HTML-base Web page, HTML standing for HyperText Markup Language, but also any kind of XML document - XML standing for Extensible Markup Language - and/or a derived application therefrom such as Standard Generalized Markup Language (SGML).

## Claims

1. Method for operating an ending widget (14) with data retrieved from a starting widget (12), both the starting widget (12) and the ending widget (14) being portable software programs installed and executed through a Markup Language Web based page in order to display, respectively, at least one visual object (26, 28, 30) and at least one visual area (32, 34, 36), **characterized in that** it comprises the following steps:
- The step for the starting widget (12) to detect a drag of the visual object (28) and to inform a distant server (38) from such detected drag,
- The step for the ending widget (14) to detect a drop in the visual area (34) and to inform the distant server (38) from such detected drop, and
- The step for the distant server (38) to correlate the drag in the starting widget (12) with the drop in the ending widget (14) so as to trigger an action whereby data associated to the visual object (28) performs a function associated with the visual area (34).

2. Method according to claim 1 wherein the starting widget (12) detects the drag of the visual object (28) when a tracking mechanism selects such visual object (26).

3. Method according to claim 1 or 2 wherein the ending widget (14) detects the drop in the visual area (34) when a tracking mechanism enters such visual area (34).

4. Method according to claim 2 or 3 wherein the tracking mechanism is a mouse, a keypad, a sensitive pad or a vocal guided mechanism.

5. Method according to any of the previous claims wherein the starting (12) widget and the ending (14) widget comprise a function (24₁₂, 24₁₄) to detect, respectively, the drag of the visual object (28) or a drop into the visual area (34) and to inform the distant server (38) of such detection.

6. Method according to any of the previous claims wherein the server correlates the drag in the starting widget (12) with the drop in the ending widget (14) through an association of the detected drag with the detected drop.

7. Method according to claim 6 wherein the association comprises the prior step of providing a status to each visual object (26, 28, 30) of the starting widget (12) indicating whether each visual object (26, 28, 30) is currently dragged or not.

8. Method according to claim 6 or 7 wherein the association comprises the prior step of providing a status to each visual area (32, 34, 36) of the ending widget (14) indicating whether a dropped is currently performed or not within each visual area (32, 34, 36).

9. Server (38) aimed to allow the operating of an ending widget (14) with data retrieved from a starting widget(12), both the starting widget (12) and the ending widget (14) being portable software programs installed and executed through a Markup Language Web based page in order to display, respectively, at least one visual object (26, 28, 30) and at least one visual area (32, 34, 36), **characterized in that** it comprises:
- means for receiving detections from both the starting widget (12) and the ending widget (14) indicating respectively a drag of the visual object (28) and a drop in the visual area (34), and
- means for correlating such drag in the starting widget (12) with such drop in the ending widget (14),
In order to trigger an action whereby data associated to the visual object (28) performs a function associated with the visual area (34) following a method according to any of the previous claims.

10. Portable software program widget (12, 14) installed and executed through a Markup Language Web based page in order to display at least one visual object (26, 28, 30) and/or at least one visual area (32, 34, 36), **characterized in that** it comprises:
- means (24₁₂) to detect a drag of the visual object (26, 28, 30) and to inform a distant server (38) from such detected drag, or
- means (24₁₄) to detect a drop in the visual area (32, 34, 36) and to inform a distant server (38) from such detected drop,
So that the distant server (38) can correlate respectively the drag or the drop in such widget (12, 14) with, respectively, a later drop in a visual area or a previous drag of a visual object in another widget so as to trigger an action whereby data associated with the dragged visual object performs a function associated with the dropping visual area following a method according to any of the previous embodiments.
